# EUROPEAN PATENT APPLICATION

(11) **EP 4 800 934 A1**
(43) Date of publication of application: **02.09.2026**
(21) Application number: 26160370.8
(22) Date of filing: 24.02.2026
(51) Int. Cl.: H04B 7/024, H04W 92/20, H04W 84/12

(54) **SYSTEM AND METHOD FOR MULTI-AP COORDINATION NEGOTIATION INDICATION**

(30) Priority: 26.02.2025 US 202563763731 P; 11.02.2026 US 202619536982
(71) Applicant: Samsung Electronics Co., Ltd., Suwon-si, Gyeonggi-do 16677 (KR)
(72) Inventor: MA, Yongsen, San Jose, CA, 95134 (US); KANDALA, Srinivas, San Jose, CA, 95134 (US)
(74) Representative: Kuhnen & Wacker Patent- und Rechtsanwaltsbüro PartG mbB

(57) **Abstract**

A system (100) and a method are disclosed for wireless communication. The method includes transmitting, by a first access point, AP (101), capability information indicating one or more multi-access point coordination, MAPC, schemes; and transmitting, by the first AP (101), an MAPC negotiation indication indicating an enabled state or a disabled state for MAPC negotiation.

## Description

### TECHNICAL FIELD

The disclosure generally relates to wireless local area networks (WLANs). More particularly, the subject matter disclosed herein relates to improvements in multiple access point (AP) coordination for wireless communication systems.

### SUMMARY

WLAN systems may be evolving to support increasingly complex deployment scenarios. Modern WLAN deployments may include multiple APs operating in overlapping or adjacent coverage areas. To improve network performance, spectrum efficiency, and user experience, coordination mechanisms among multiple APs have been developed.

The Institute of Electrical and Electronics Engineers (IEEE) 802.11 working group may develop standards for WLAN technologies. IEEE 802.11bn, also referred to as ultra-high reliability (UHR) in IEEE terminology or wireless fidelity (Wi-Fi) 8 in Wi-Fi Alliance (WFA) terminology, may introduce multi-AP coordination (MAPC) schemes to enable cooperative operation among multiple APs. MAPC schemes may include coordinated restricted target wake time (Co-RTWT), coordinated spatial reuse (Co-SR), and coordinated beamforming (Co-BF). In addition to these schemes, MAPC may use information schemes including coordinated time division multiple access (Co-TDMA) and coordinated channel recommendation (Co-CR). These MAPC schemes may allow APs to coordinate transmissions, share channel state information, perform joint scheduling, coordinate spatial reuse parameters, align target wake time schedules, or implement other cooperative techniques to improve overall network throughput.

In some WLAN specifications, APs may advertise their MAPC capabilities in Beacon frames or other management frames. An AP's MAPC capability information may indicate which MAPC schemes the AP is capable of supporting.

However, one issue with the above approach is having MAPC capability does not necessarily mean an AP is willing or available to participate in MAPC negotiation at any given time. An AP may be capable of MAPC operation but may not want to negotiate MAPC agreements with all neighboring APs, or may not want to initiate new negotiations during certain operational phases.

To overcome these issues, systems and methods are described herein for multi-AP coordination negotiation indication. An AP may transmit an indication that signals whether the AP is willing to participate in MAPC negotiation or MAPC coordination. The indication may be separate from and complementary to the AP's MAPC capability information. While MAPC capability information may describe what an AP can do, the MAPC negotiation indication may describe whether the AP is willing to do it at a given time.

The above approaches improve on previous methods because they provide a mechanism for APs to explicitly control when and with whom they participate in MAPC negotiation, independent of their underlying MAPC capabilities. Network efficiency may be improved by reducing unnecessary negotiation signaling when APs are not willing or able to establish new coordination agreements. The reduction in unnecessary MAPC agreement negotiation and MAPC request and response frames may decrease wireless medium occupancy and allow more time for data transmission. Processing resources at APs may be conserved by avoiding the need to receive, process, or reject unwanted negotiation requests. Network operations may be simplified by providing clearer signaling of AP intentions, allowing for more predictable and deterministic coordination establishment procedures.

According to an aspect of the disclosure, a method for wireless communication includes transmitting, by a first AP, capability information indicating one or more MAPC schemes; and transmitting, by the first AP, an MAPC negotiation indication indicating an enabled state or a disabled state for MAPC negotiation.

According to another aspect of the disclosure, a first electronic device includes a transceiver; and a processor coupled to the transceiver. The processor is configured to cause the transceiver to transmit capability information indicating one or more MAPC schemes; and cause the transceiver to transmit a MAPC negotiation indication indicating an enabled state or a disabled state for MAPC negotiation.

According to another aspect of the disclosure, a method for wireless communication includes receiving, by a second AP, capability information indicating one or more MAPC schemes; and receiving, by the first AP, an MAPC negotiation indication indicating an enabled state or a disabled state for MAPC negotiation.

According to another aspect of the disclosure, a second electronic device includes a transceiver and a processor coupled to the transceiver. The processor is configured to cause the transceiver to receive capability information indicating one or more MAPC schemes; and cause the transceiver to receive an MAPC negotiation indication indicating an enabled state or a disabled state for MAPC negotiation.

Although some of the aspects relate to the first electronic device/the first AP and the method performed by the first electronic device/the first AP, these aspects may also apply in a corresponding manner to the respective other aspects related to the second electronic device/the second AP and the method performed by the second electronic device/the second AP.

### BRIEF DESCRIPTION OF THE DRAWING

In the following section, the aspects of the subject matter disclosed herein will be described with reference to exemplary embodiments illustrated in the figures, in which:
FIG. 1 is an example wireless network scenario in which a plurality of APs are shown that either support or do not support MAPC negotiation, according to an embodiment;
FIG. 2 is a timing diagram for multi-AP coordination negotiation indication, according to an embodiment;
FIG. 3A is a flowchart illustrating a method for wireless communication, according to an embodiment;
FIG. 3B is a flowchart illustrating a method for wireless communication, according to an embodiment;
FIG. 4 is a block diagram of an electronic device in a network environment, according to an embodiment; and
FIG. 5 is a block diagram of a system including a station (STA) and an AP, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware or hardware configured to provide the functionality described herein in connection with a module. For example, software may be embodied as a software package, code or instruction set or instructions, and the term "hardware," as used in any implementation described herein, may include, for example, singly or in any combination, an assembly, hardwired circuitry, programmable circuitry, state machine circuitry, or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, the term "MAPC" may refer to cooperative techniques among multiple APs in a WLAN to improve network performance, reduce interference, or enhance spectrum efficiency. MAPC may include various coordination schemes such as Co-RTWT, Co-SR, Co-BF, Co-TDMA, Co-CR, or other cooperative operations where two or more APs work together according to agreed-upon parameters and procedures.

As used herein, the term "AP" (also referred to as an "electronic device") may refer to a wireless network device that allows wireless communication devices to connect to a wired network or wireless network infrastructure. This may include routers, stations (STAs), terminals, or base stations, for example. An AP may transmit and receive wireless signals to and from STAs, other APs, or other wireless devices. An AP may operate according to IEEE 802.11 standards or other wireless communication protocols. An AP may include processing circuitry, memory, transmit and receive circuitry, antennas, and other hardware and software components necessary to implement wireless communication functions and MAPC procedures.

As used herein, the term "capability information" may refer to information transmitted by an AP that indicates which MAPC schemes, features, or functionalities the AP is capable of supporting. Capability information may describe what an AP can do in terms of coordination mechanisms, supported parameters, hardware or software features, or technical specifications. Capability information may be carried in Beacon frames, probe response frames, association response frames, capability fields, information elements, or other management frames or signaling mechanisms. Capability information may indicate support for specific MAPC schemes such as Co-RTWT, Co-SR, Co-BF, Co-TDMA, Co-Scheduling, or other coordination mechanisms.

As used herein, the term "negotiation indication" may refer to signaling transmitted by an AP that indicates whether the AP is willing to participate in MAPC negotiation, MAPC discovery, or MAPC coordination at a given time. The negotiation indication may be separate from and complementary to capability information. While capability information can describe what an AP can do, the negotiation indication can describe whether the AP is willing to do it (e.g., what the capability information indicates that the AP can do) at a particular time or with particular neighboring APs. The negotiation indication may be implemented as one or more bits, field values, information elements, or other signaling mechanisms in management frames. The negotiation indication may have an enabled state indicating willingness to participate in MAPC negotiation and a disabled state indicating unwillingness to participate in MAPC negotiation.

As used herein, the term "broadcast management frame" refers to a management frame transmitted by an AP that is intended for reception by multiple recipients. A broadcast management frame may be addressed to a broadcast address or multicast address rather than to a specific unicast address. Broadcast management frames may include Beacon frames, which are transmitted periodically by an AP to announce its presence and carry capability information and other network parameters. Broadcast management frames may be received and processed by all devices within range of the transmitting AP, including neighboring APs associated STAs, and unassociated STAs.

As used herein, the term "unicast management frame" refers to a management frame transmitted by an AP that is addressed to a specific recipient device identified by its media access control (MAC) address. A unicast management frame may be received and processed by the intended recipient, while other devices may filter out the frame based on the destination address. Unicast management frames may include action frames, public action frames, association request and response frames, authentication frames, or other individually addressed frames.

As used herein, the term "MAPC discovery" or "MAPC discovery procedure" may refer to a process by which an AP identifies neighboring APs that are capable of and willing to participate in multi-AP coordination. MAPC discovery may involve monitoring Beacon frames or other broadcast frames from neighboring APs, exchanging probe request and response frames, reading capability information and negotiation indications from management frames, or other mechanisms for identifying potential MAPC coordination partners.

As used herein, the term "MAPC agreement negotiation" or "MAPC negotiation" may refer to a process by which two or more APs exchange messages to establish parameters, modes, or operational procedures for multi-AP coordination. MAPC agreement negotiation may involve exchanging proposed coordination parameters, selecting specific MAPC schemes to employ, agreeing on timing offsets or scheduling policies, establishing security associations, confirming agreed-upon settings, or other message exchanges necessary to establish a coordination agreement between APs.

As used herein, the term "MAPC renegotiation" may refer to a process by which APs that have previously established a coordination agreement exchange messages to modify, update, or reconfigure their coordination parameters, modes, or operational procedures. MAPC renegotiation may occur after initial negotiation has been completed and coordination agreements have been established. Renegotiation may be triggered by changes in network conditions, traffic patterns, channel conditions, or other factors that necessitate updating coordination agreements.

As discussed above, many systems and methods that relate to IEEE 802.11bn do not define a procedure for an AP to indicate the AP's intention to participate in MAPC negotiation or not. Without such a mechanism, neighboring APs may be unable to distinguish between an AP that is capable of MAPC but unwilling to negotiate, and an AP that has not yet advertised its MAPC capabilities. For example, an AP may have MAPC enabled and may advertise MAPC capabilities, but may still not want to participate in multi-AP coordination or negotiation with certain APs in certain cases.

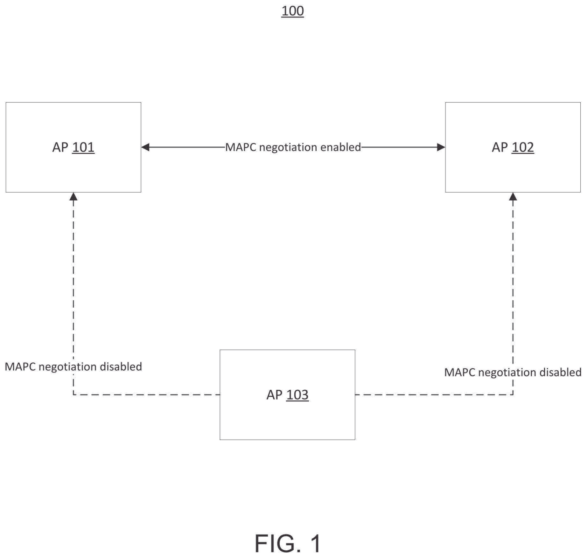

FIG. 1 is an example wireless network scenario in which a plurality of APs are shown that either support or do not support MAPC negotiation, according to an embodiment.

Referring to FIG. 1, a wireless network 100 is shown. AP 101, 102, and 103 may support MAPC under IEEE 802.11bn, and may selectively indicate willingness or unwillingness to participate in MAPC negotiation. In the example, APs 101 and 102 are shown exchanging MAPC negotiation messaging with each other, and AP 103 transmits an indication to APs 101 and 102 that MAPC negotiation is disabled for AP 103. Additionally or alternatively, AP 103 may receive an indication from APs 101 and 102 that MAPC negation is disabled for AP 103. Each of APs 101, 102, and 103 may possess MAPC capabilities, yet may choose whether to negotiate coordination agreements based on the multi-AP coordination negotiation indication disclosed herein.

As described in the present disclosure, there are several scenarios where an AP, such as AP 101, AP 102, or AP 103, may not want to participate in MAPC negotiation even though the AP has MAPC capabilities. For example, AP 101 may only want to coordinate with AP 102, but not with all neighboring APs, due to operator preference, policy relationships, roaming agreements, or vendor restrictions. In another scenario, AP 102 may have already finalized MAPC negotiation with AP 101 through a backhaul connection and may not want to renegotiate over the air with AP 103. Performing redundant negotiations with AP 103 may, for example, consume unnecessary wireless resources. In yet another case, AP 101 or AP 102 may have already completed MAPC agreement with other network devices (e.g., associated STAs) and does not want renegotiation to disrupt locked MAPC modes or parameters.

Without a negotiation indication, AP 101 or 102 may attempt MAPC discovery or negotiation with AP 103, resulting in wasted signaling overhead and unnecessary request and response exchanges over the air. Processing these negotiation attempts by APs 101 and 102 would consume wireless medium time as well as processing resources at APs 101 and 102. In the illustrated example, AP 103 transmits MAPC negotiation indications that disable negotiation with AP 101 and 102, preventing APs 101 and 102from initiating MAPC negotiation requests or MAPC response frames.

The negotiation indication may be included in Beacon or management frames or selectively transmitted to specific APs via unicast frames. For example, AP 101 may transmit a disabled indication in broadcast while sending an enabled indication to AP 102 in a unicast frame. In other embodiments, the indication may be implemented using a single bit indicating general MAPC willingness to negotiate, or multiple bits that each correspond to different MAPC mechanisms, such as one or more of Co-TDMA, Co-CR, Co-RTWT, Co-SR, or Co-BF. APs that receive disabled indications may alter channel selection or refrain from sending MAPC requests to the transmitting AP, thereby reducing unnecessary overhead.

As mentioned above, systems and methods are described herein for multi-AP coordination negotiation indication. An AP may transmit an indication that signals whether the AP is willing to participate in MAPC negotiation or MAPC coordination. The indication may be separate from and complementary to the AP's MAPC capability information. While MAPC capability information describes what an AP can do, the MAPC negotiation indication may describe whether the AP is willing to do it at a given time. An AP may have MAPC capabilities carried in Beacon frames or other management frames, and may additionally indicate whether it is willing to participate in multi-AP coordination or negotiation or not in broadcast frames or unicast frames.

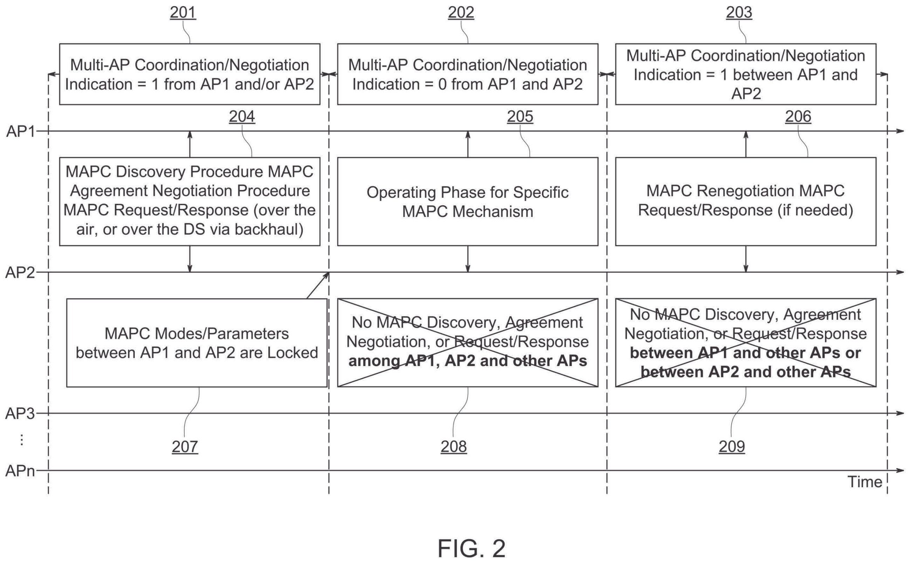

FIG. 2 is a timing diagram for multi-AP coordination negotiation indication, according to an embodiment.

FIG. 2 depicts an example operational scenario where multiple APs (AP1 (e.g., AP 101 in FIG. 1), AP2 (e.g., AP 102 in FIG. 1), AP3 (e.g., AP 103 in FIG. 1), through APn) utilize MAPC negotiation indication over time to control participation in multi-AP coordination procedures.

Referring to FIG. 2, the horizontal axis represents time progression, with multiple APs (AP1, AP2, AP3,... APn) shown as horizontal timeline bars. The operational sequence may be divided into three distinct phases 201, 202, and 203, each representing different states of MAPC negotiation indication and corresponding operational behaviors. In various embodiments, the phases may occur in different sequential orders, one or more phases may be omitted, phases may be repeated, or additional phases may be included. The number of phases, duration of each phase, and transitions between phases may be determined by various factors including network conditions, traffic load, operator policies, coordination requirements, or AP capabilities.

In a first phase 201, AP1 and AP2 may set their MAPC negotiation indication to an enabled state from AP1, from AP2, or from both AP1 and AP2. The enabled state may be represented by a first value, a first bit pattern, a first field setting, or a first signaling configuration. For example, the enabled state may be indicated by setting one or more bits to a logical high value, by setting a field to a predetermined enabled value, by including a specific information element in a management frame, or by other signaling mechanisms. The MAPC negotiation indication may be carried in various portions of a management frame, such as within a parameter field, within an information element, within a capability field, as a subfield of an existing field, or as a dedicated indication field. In embodiments where multiple MAPC schemes are supported, the indication may include multiple bits or subfields, with each bit or subfield corresponding to a different MAPC scheme such as Co-RTWT, Co-SR, Co-BF, Co-TDMA, or Co-CR. Each bit or subfield may be independently set to an enabled or disabled state, allowing an AP to selectively enable negotiation for some MAPC schemes while disabling negotiation for others.

During this first phase 201, AP1 and AP2 may perform MAPC discovery procedures and MAPC agreement negotiation procedures with each other, as indicated by reference numeral 204. The MAPC discovery procedure may allow AP1 and AP2 to identify each other as capable MAPC partners and exchange initial capability information. The discovery procedure may involve exchanging Beacon frames, probe request and response frames, action frames, or other management frames that carry MAPC capability information and negotiation indication information. The MAPC agreement negotiation procedure may allow AP1 and AP2 to establish coordination parameters, select specific MAPC schemes to employ, negotiate timing parameters, agree on operational modes, exchange channel state information, or establish security associations. Reference numeral 204 may further indicate that MAPC request and response exchanges may occur during this phase 201. These request and response exchanges may be performed over the air interface using management frames such as public action frames, vendor-specific action frames, or MAPC-specific frame formats. Additionally or alternatively, these exchanges may be performed over a distribution system (DS) via a backhaul connection between AP1 and AP2, which may include wired Ethernet connections, wireless backhaul links, or other inter-AP communication channels.

The transition from the first phase 201 to subsequent phases may be triggered by various conditions. For example, the transition may occur after successful completion of MAPC agreement negotiation, after a predetermined time period, after exchange of a specified number of messages, after establishment of security associations, upon receipt of a confirmation message, or based on other completion criteria. The decision to transition may be made by one or both of AP1 and AP2 based on internal logic, state machine transitions, operator configuration, or network management commands. In some embodiments, an AP may maintain the MAPC negotiation indication in a consistent state throughout a lifetime of an association, without transitioning between phases. For example, an AP may maintain the MAPC negotiation indication in a disabled state throughout the association lifetime, indicating that the AP does not wish to participate in MAPC negotiation with any neighboring APs during that association. Alternatively, an AP may maintain the MAPC negotiation indication in an enabled state throughout the association lifetime, indicating willingness to participate in MAPC negotiation.

Following the MAPC discovery and agreement negotiation procedures in the first phase 201, AP1 and AP2 may establish agreed-upon MAPC modes and parameters. Reference numeral 207 may indicate that the MAPC modes and parameters between AP1 and AP2 may become locked. The locking of parameters may be implemented through various mechanisms. In one embodiment, locking may involve determining and storing the negotiated parameters in non-volatile memory or persistent storage to prevent modification. In another embodiment, locking may involve setting configuration flags or status bits that indicate the parameters are finalized. In yet another embodiment, locking may involve transitioning to a specific operational state in a state machine where renegotiation is not permitted. In a further embodiment, locking may involve starting a timer that prevents renegotiation for a specified duration, after which parameters may become unlocked and subject to renegotiation. The locked parameters may include coordination mode selections, timing offsets, transmission power levels, beamforming matrices, scheduling policies, spatial reuse parameters, or other operational parameters agreed upon during negotiation.

In a second phase 202, AP1 and AP2 may set their MAPC negotiation indication to a disabled state from both AP1 and AP2, which may indicate that the MAPC modes and parameters between AP1 and AP2 are locked. The disabled state may be represented by a second value different from the first value used for the enabled state, a second bit pattern, a second field setting, or a second signaling configuration. For example, the disabled state may be indicated by setting one or more bits to a logical low value, by setting a field to a predetermined disabled value, by omitting a specific information element from a management frame, or by other signaling mechanisms. The MAPC negotiation indication may be transmitted in broadcast management frames such as Beacon frames, which may be transmitted periodically according to a Beacon interval, or in broadcast, groupcast, or unicast MAPC frames. The Beacon interval may be a standard interval such as 100 time units (TUs), or may be configured to other values. In some embodiments, the indication may be transmitted in every Beacon frame, while in other embodiments it may be transmitted in every Nth Beacon frame where N is an integer greater than 1. The indication may additionally or alternatively be transmitted in probe response frames sent in response to probe requests from other APs or STAs, in association response frames, in announcement frames, or in other broadcast management frames, unicast management frames, or multicast management frames.

During this second phase 202, AP1 and AP2 may be operating in an operating phase for a specific MAPC mechanism, as indicated by reference numeral 205. The operating phase 205 may involve active coordination between AP1 and AP2 according to the MAPC modes and parameters established during the first phase 201. The active coordination may include coordinated transmission scheduling, coordinated beamforming weight selection, spatial reuse threshold coordination, target wake time alignment, joint channel access decisions, interference mitigation procedures, or other cooperative operations. The coordination may be performed according to protocols defined in the IEEE 802.11bn specification or vendor-specific coordination protocols.

Because the MAPC negotiation indication is set to the disabled state during the second phase 202, there may be no MAPC discovery, no MAPC agreement negotiation, and no MAPC request or response exchanges among AP1, AP2, and other APs (such as AP3 through APn), as indicated by reference numeral 208. The prevention of these procedures may be implemented through various mechanisms at receiving APs. When an AP such as AP3 receives a management frame from AP1 or AP2 containing the MAPC negotiation indication in the disabled state, AP3 may take various actions to avoid initiating negotiation. In one embodiment, AP3 may suppress transmission of MAPC negotiation request frames to AP1 or AP2. In another embodiment, AP3 may update an internal data structure, table, or database that maintains a list of neighboring APs and their negotiation availability status, marking AP1 and AP2 as unavailable for MAPC negotiation. In yet another embodiment, AP3 may set internal state flags or variables that prevent MAPC-related processing for frames from AP1 or AP2. In a further embodiment, AP3 may configure hardware or software filters to ignore MAPC discovery or negotiation frames from AP1 or AP2. In another embodiment, AP3 may remove AP1 and AP2 from a coordination candidate list used for selecting potential MAPC partners. These mechanisms may reduce unnecessary signaling overhead by preventing AP3 from attempting to initiate MAPC negotiation with AP1 or AP2, and may avoid potential disruption to the established coordination between AP1 and AP2.

The transition from the second phase 202 to the third phase 203 may be triggered by various conditions. For example, the transition may occur when AP1 or AP2 determines that MAPC parameters need to be updated or renegotiated. The determination may be based on factors such as changes in traffic patterns, changes in channel conditions, changes in interference levels, mobility of associated STAs, expiration of parameter validity timers, receipt of measurement reports indicating degraded performance, operator commands, or network management directives. The decision to transition may involve evaluating performance metrics, comparing current conditions to threshold values, executing decision algorithms, or consulting policy databases.

In a third phase 203, AP1 and AP2 may selectively set their MAPC negotiation indication to an enabled state between AP1 and AP2 only. This selective enabling may be achieved through various signaling mechanisms. In one embodiment, AP1 and AP2 may continue to transmit broadcast management frames (such as Beacon frames) with the MAPC negotiation indication set to the disabled state for general broadcast to all neighboring APs. Simultaneously, AP1 and AP2 may exchange unicast management frames with each other that contain the MAPC negotiation indication set to the enabled state. The unicast frames may include action frames, public action frames, vendor-specific action frames, individually addressed management frames, or other frame types defined in IEEE 802.11 that are directed to a specific recipient address. The unicast frames may be addressed specifically between AP1 and AP2 using their respective MAC addresses, and may not be received or processed by other APs such as AP3 through APn due to MAC-level filtering. Other APs such as AP3 through APn may continue to receive and process the broadcast frames indicating the disabled state, and may therefore refrain from initiating MAPC negotiation with AP1 or AP2. Meanwhile, AP1 and AP2 may process the unicast frames and recognize that the enabled indication applies to their bilateral relationship.

In another embodiment, the selective enabling in the third phase 203 may be achieved through out-of-band signaling. AP1 and AP2 may exchange messages over a backhaul connection via the DS, where the backhaul messages carry the enabled MAPC negotiation indication. The backhaul connection may use wired Ethernet protocols, wireless backhaul protocols, inter-process communication if AP1 and AP2 are controlled by a common controller, or other inter-AP communication mechanisms. While communicating the enabled indication via backhaul, AP1 and AP2 may continue to broadcast the disabled indication over the air interface to other APs. In yet another embodiment, AP1 and AP2 may use a combination of broadcast and unicast signaling, where broadcast frames indicate a general policy and unicast frames or backhaul messages provide exceptions or overrides for specific AP pairs.

During the third phase 203, AP1 and AP2 may perform MAPC renegotiation procedures or exchange MAPC request and response messages if needed, as indicated by reference numeral 206. The renegotiation or request/response exchanges may allow AP1 and AP2 to update their MAPC modes or parameters, adjust coordination schemes, modify timing parameters, reconfigure operational settings, add or remove MAPC mechanisms, update security associations, or perform other modifications to their coordination agreement. The renegotiation procedures may follow protocols similar to those used in the initial negotiation during the first phase 201, or may use abbreviated or expedited procedures that are based on the existing coordination relationship. The procedures may include exchanging updated capability information, proposing modified parameters, exchanging acknowledgments or confirmations, or performing verification checks.

Concurrently during the third phase 203, there may be no MAPC discovery, no MAPC agreement negotiation, and no MAPC request or response exchanges between AP1 and other APs (such as AP3 through APn) or between AP2 and other APs, as indicated by reference numeral 209. This selective exclusion may be maintained through the same mechanisms described for reference numeral 208, where other APs continue to observe the disabled indication in broadcast frames and therefore refrain from initiating MAPC procedures with AP1 or AP2. This selective enabling of the MAPC negotiation indication may demonstrate that an AP may maintain different indication states for different neighboring APs, enabling coordination updates with intended APs while preventing new negotiations with unintended APs. The ability to provide different indications to different APs may be implemented through the combination of broadcast and unicast signaling, through AP-specific configuration tables, through policy-based filtering, or through other selective signaling mechanisms.

The operational scenario illustrated in FIG. 2 demonstrates several advantages of the MAPC negotiation indication mechanism. During the first phase 201, the enabled indication may allow APs to efficiently discover each other and establish coordination agreements without ambiguity about willingness to negotiate. During the second phase 202, the disabled indication may prevent unnecessary negotiation attempts from other APs, reducing signaling overhead measured in terms of frame transmissions and medium access time, decreasing medium access contention by reducing the number of APs attempting to transmit negotiation frames, conserving processing resources at both transmitting and receiving APs by avoiding frame generation, transmission, reception, and processing, and simplifying network operations by providing clear and deterministic signaling of AP intentions. During the third phase 203, the selective indication may allow coordinating APs to update their agreements while continuing to prevent interference from other APs, which can provide dynamic adaptation to changing conditions without opening negotiations to all neighbors.

The ability to transition between different indication states over time may allow APs to adapt to changing network conditions, traffic patterns, or operational requirements. The state transitions may be controlled by various entities and mechanisms. In one embodiment, state transitions may be autonomously determined by each AP based on local observations, measurements, or algorithms executing in the AP's processor or control circuitry. In another embodiment, state transitions may be coordinated between APs through explicit signaling or negotiation. In yet another embodiment, state transitions may be commanded by a centralized network management system, a WLAN controller, or a cloud-based management platform that monitors network performance and directs AP behavior. In a further embodiment, state transitions may be triggered by operator input through a management interface. The flexibility in state control may allow the MAPC negotiation indication mechanism to be deployed in various network architectures and operational scenarios.

While FIG. 2 illustrates a specific example with three phases 201, 202, and 203 in a particular sequence, various embodiments may implement different operational patterns. Some embodiments may implement only a subset of the phases shown, such as implementing only phases 201 and 202 without phase 203. Some embodiments may repeat phases, such as cycling between phases 201 and 202 multiple times. Some embodiments may implement phases in different orders, such as beginning operation in phase 202 with a disabled indication before transitioning to phase 201 when negotiation is desired. Some embodiments may implement additional phases not shown in FIG. 2, such as intermediate phases with partially enabled indications or transitional states. The MAPC negotiation indication values, timing, duration, and sequencing may be configured by network management systems, determined by AP algorithms based on network conditions, traffic measurements, interference measurements, quality of service requirements, specified by operator policies stored in configuration databases, or determined through machine learning algorithms that optimize network performance.

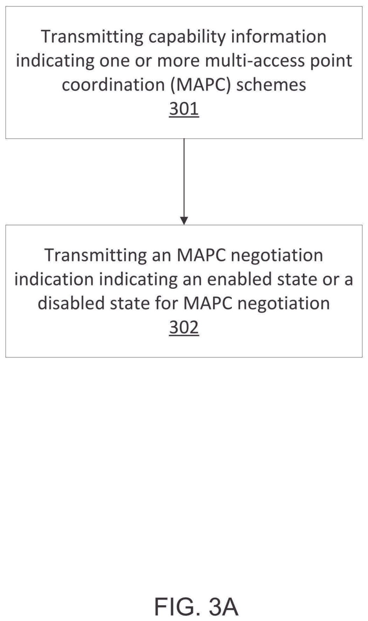

FIG. 3A is a flowchart illustrating a method for wireless communication, according to an embodiment.

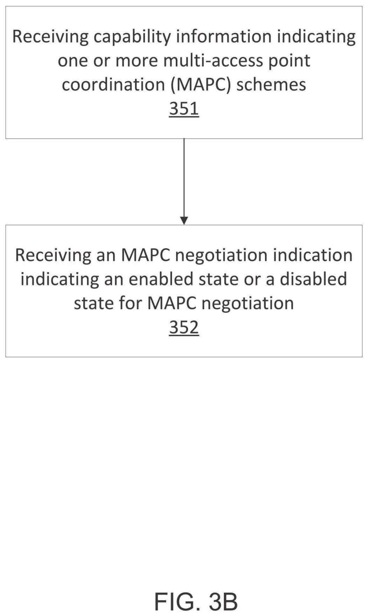

The steps shown in FIG. 3 may be performed in a different order, in parallel, or with some steps omitted or added. The operations shown may be performed by processing circuitry of an AP, such as the processor and communication module described with respect to the electronic device of the network environment.

Referring to FIG. 3A, at step 301, a first AP (electronic device) may transmit capability information indicating one or more MAPC schemes. The capability information may indicate which coordination mechanisms the AP is capable of supporting. The capability information may be included in one or more management frames, such as Beacon frames, probe response frames, or other broadcast or unicast management frames. The capability information may identify support for one or more MAPC mechanisms, including Co-RTWT, Co-SR, Co-BF, Co-TDMA, Co-CR, or other coordination schemes.

After transmitting the capability information, in step 302, the first AP (electronic device) may transmit an MAPC negotiation indication indicating an enabled state or a disabled state for MAPC negotiation. The negotiation indication may be transmitted in the same frame as the capability information or in a different management frame. The negotiation indication may be carried in a broadcast frame to inform multiple neighboring APs or may be transmitted in a unicast frame directed to a specific AP. The indication may be implemented as one or more bits, a field value, or an information element. An enabled state may indicate availability (willingness) to participate in MAPC discovery and agreement negotiation, while a disabled state may indicate unavailability (unwillingness) to participate in MAPC negotiation. In some embodiments, the first AP may transmit different negotiation indications to different neighboring APs.

FIG. 3B is a flowchart illustrating a method for wireless communication, according to an embodiment.

The steps shown in FIG. 3B may be performed in a different order, in parallel, or with some steps omitted or added. The method may be executed by one or more processors configured to carry out the operations using instructions stored in a memory. The operations shown may be performed by processing circuitry of an AP, such as the processor and communication module described with respect to the electronic device of the network environment.

Referring to FIG. 3B, in step 351, the first AP may receive capability information indicating one or more MAPC schemes. The capability information may be obtained from a broadcast management frame or a unicast management frame transmitted by a neighboring AP (a second AP). The received capability information may be processed to determine which MAPC coordination mechanisms the neighboring AP supports.

In step 352, the first AP may receive an MAPC negotiation indication indicating an enabled state or a disabled state for MAPC negotiation. The negotiation indication may be received in a Beacon frame, probe response frame, action frame, or other management frame. Upon receiving the negotiation indication, the first AP may determine whether to initiate MAPC discovery, MAPC agreement negotiation, or MAPC request/response exchanges with the transmitting AP. If the indication corresponds to the disabled state, the first AP may refrain from initiating MAPC negotiation procedures with the transmitting AP. If the indication corresponds to the enabled state, the first AP may initiate or continue MAPC discovery or negotiation procedures.

In an example implementation, the steps and operations of FIGS. 3A and 3B may be understood with reference to the network of FIG. 1 including AP 101, AP 102, and AP 103. AP 103 may perform the transmitting-side method of FIG. 3A. For example, at step 301, AP 103 may transmit capability information in a Beacon frame indicating support for one or more MAPC schemes. At step 302 AP 103 may transmit a MAPC negotiation indication representing negotiation availability. The indication may be transmitted as a broadcast management frame received by both AP 101 and AP 102, or AP 103 may transmit a unicast management frame to AP 101 and/or 102 indicating an enabled state while indicating a disabled state to AP 101 and/or 102. AP 102 and/or 103 may perform the receiving-side method of FIG. 3B by receiving the capability information at step 351 and receiving the negotiation indication at step 352, and may initiate MAPC discovery or agreement negotiation when the indication corresponds to the enabled state. In contrast, AP 101 may receive the same capability information at step 351 but may determine from step 352 that negotiation is unavailable and may refrain from transmitting MAPC negotiation request frames, initiating pre-association procedures, or performing MAPC agreement negotiation.

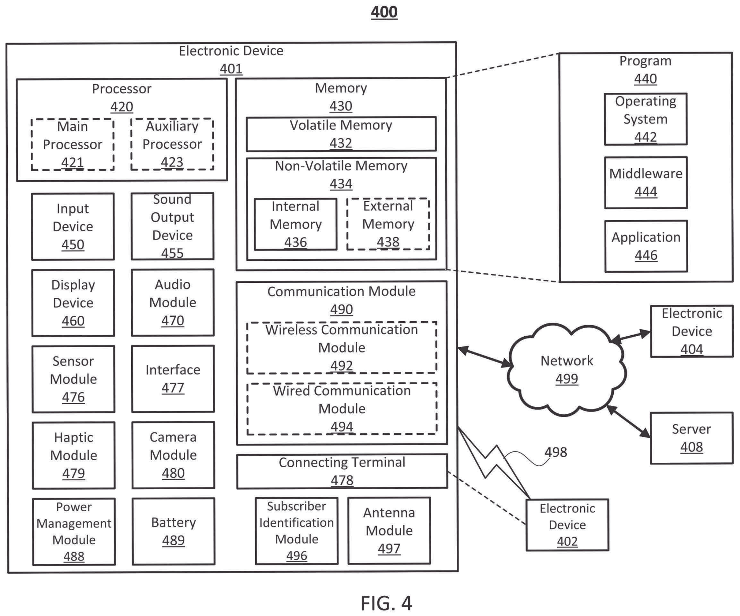

FIG. 4 is a block diagram of an electronic device in a network environment, according to an embodiment.

Referring to FIG. 4, an electronic device 401 (e.g., an AP) in a network environment 400 may communicate with an electronic device 402 (e.g., an AP) via a first network 498 (e.g., a short-range wireless communication network), or an electronic device 404 (e.g., an AP) or a server 408 via a second network 499 (e.g., a long-range wireless communication network). The electronic device 401 may communicate with the electronic device 404 via the server 408. The electronic device 401 may include a processor 420, a memory 430, an input device 450, a sound output device 455, a display device 460, an audio module 470, a sensor module 476, an interface 477, a haptic module 479, a camera module 480, a power management module 488, a battery 489, a communication module 490, a subscriber identification module (SIM) card 496, or an antenna module 497. In one embodiment, at least one (e.g., the display device 460 or the camera module 480) of the components may be omitted from the electronic device 401, or one or more other components may be added to the electronic device 401. Some of the components may be implemented as a single IC. For example, the sensor module 476 (e.g., a fingerprint sensor, an iris sensor, or an illuminance sensor) may be embedded in the display device 460 (e.g., a display).

The processor 420 may execute software (e.g., a program 440) to control at least one other component (e.g., a hardware or a software component) of the electronic device 401 coupled with the processor 420 and may perform various data processing or computations.

The processor 420 of the electronic device 401 (which may be configured as an AP) may implement one or more aspects of the disclosed MAPC negotiation indication techniques. The processor 420 may execute software instructions stored in the memory 430 to determine when to set an MAPC negotiation indication to an enabled state or a disabled state based on operational conditions, coordination status with neighboring APs, or network policies. The memory 430 may store MAPC capability information, tables tracking negotiation indication states for multiple neighboring APs, locked MAPC parameters established through prior negotiation procedures, or policy information defining conditions for enabling or disabling MAPC negotiation. The communication module 490 may transmit broadcast management frames such as Beacon frames carrying the MAPC negotiation indication to multiple neighboring APs, and may transmit unicast management frames carrying selective MAPC negotiation indications to specific intended APs. The interface 477 may be used to communicate with a backhaul network or distribution system, allowing the processor 420 to exchange MAPC negotiation information or negotiation indication values with neighboring APs via the backhaul rather than over the air interface.

The processor 420 may implement logic that controls transitions between different operational phases, such as transitioning from a first phase where MAPC negotiation indication is enabled to allow MAPC discovery and agreement negotiation (e.g., 201 in FIG. 2), to a second phase where the indication is disabled after locking MAPC parameters (e.g., 202 in FIG. 2), to a third phase where selective indication is enabled for renegotiation with specific APs while remaining disabled for other APs (e.g., 203 in FIG. 2). The memory 430 may store multiple bits or field values representing MAPC negotiation indication states for different MAPC schemes, allowing the processor 420 to independently control negotiation willingness for each scheme.

As at least part of the data processing or computations, the processor 420 may load a command or data received from another component (e.g., the sensor module 476 or the communication module 490) in volatile memory 432, process the command or the data stored in the volatile memory 432, and store resulting data in non-volatile memory 434. The processor 420 may include a main processor 421 (e.g., a central processing unit (CPU) or an application processor (AP)), and an auxiliary processor 423 (e.g., a graphics processing unit (GPU), an image signal processor (ISP), a sensor hub processor, or a communication processor) that is operable independently from, or in conjunction with, the main processor 421. Additionally or alternatively, the auxiliary processor 423 may be adapted to consume less power than the main processor 421, or execute a particular function. The auxiliary processor 423 may be implemented as being separate from, or a part of, the main processor 421.

The auxiliary processor 423 may control at least some of the functions or states related to at least one component (e.g., the display device 460, the sensor module 476, or the communication module 490) among the components of the electronic device 401, instead of the main processor 421 while the main processor 421 is in an inactive (e.g., sleep) state, or together with the main processor 421 while the main processor 421 is in an active state (e.g., executing an application). The auxiliary processor 423 (e.g., an image signal processor or a communication processor) may be implemented as part of another component (e.g., the camera module 480 or the communication module 490) functionally related to the auxiliary processor 423.

The memory 430 may store various data used by at least one component (e.g., the processor 420 or the sensor module 476) of the electronic device 401. The various data may include, for example, software (e.g., the program 440) and input data or output data for a command related thereto. The memory 430 may include the volatile memory 432 or the non-volatile memory 434. Non-volatile memory 434 may include internal memory 436 and/or external memory 438.

The program 440 may be stored in the memory 430 as software, and may include, for example, an operating system (OS) 442, middleware 444, or an application 446.

The input device 450 may receive a command or data to be used by another component (e.g., the processor 420) of the electronic device 401, from the outside (e.g., a user) of the electronic device 401. The input device 450 may include, for example, a microphone, a mouse, or a keyboard.

The sound output device 455 may output sound signals to the outside of the electronic device 401. The sound output device 455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 460 may visually provide information to the outside (e.g., a user) of the electronic device 401. The display device 460 may include, for example, a display, a hologram device, or a projector and control circuitry to control a corresponding one of the display, hologram device, and projector. The display device 460 may include touch circuitry adapted to detect a touch, or sensor circuitry (e.g., a pressure sensor) adapted to measure the intensity of force incurred by the touch.

The audio module 470 may convert a sound into an electrical signal and vice versa. The audio module 470 may obtain the sound via the input device 450 or output the sound via the sound output device 455 or a headphone of an external electronic device 402 directly (e.g., wired) or wirelessly coupled with the electronic device 401.

The sensor module 476 may detect an operational state (e.g., power or temperature) of the electronic device 401 or an environmental state (e.g., a state of a user) external to the electronic device 401, and then generate an electrical signal or data value corresponding to the detected state. The sensor module 476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 477 may support one or more specified protocols to be used for the electronic device 401 to be coupled with the external electronic device 402 directly (e.g., wired) or wirelessly. The interface 477 may include, for example, a high- definition multimedia interface (HDMI), a universal serial bus (USB) interface, a secure digital (SD) card interface, or an audio interface.

A connecting terminal 478 may include a connector via which the electronic device 401 may be physically connected with the external electronic device 402. The connecting terminal 478 may include, for example, an HDMI connector, a USB connector, an SD card connector, or an audio connector (e.g., a headphone connector).

The haptic module 479 may convert an electrical signal into a mechanical stimulus (e.g., a vibration or a movement) or an electrical stimulus which may be recognized by a user via tactile sensation or kinesthetic sensation. The haptic module 479 may include, for example, a motor, a piezoelectric element, or an electrical stimulator.

The camera module 480 may capture a still image or moving images. The camera module 480 may include one or more lenses, image sensors, image signal processors, or flashes. The power management module 488 may manage power supplied to the electronic device 401. The power management module 488 may be implemented as at least part of, for example, a power management integrated circuit (PMIC).

The battery 489 may supply power to at least one component of the electronic device 401. The battery 489 may include, for example, a primary cell which is not rechargeable, a secondary cell which is rechargeable, or a fuel cell.

The communication module 490 may support establishing a direct (e.g., wired) communication channel or a wireless communication channel between the electronic device 401 and the external electronic device (e.g., the electronic device 402, the electronic device 404, or the server 408) and performing communication via the established communication channel. The communication module 490 may include one or more communication processors that are operable independently from the processor 420 (e.g., the AP) and supports a direct (e.g., wired) communication or a wireless communication. The communication module 490 may include a wireless communication module 492 (e.g., a cellular communication module, a short-range wireless communication module, or a global navigation satellite system (GNSS) communication module) or a wired communication module 494 (e.g., a local area network (LAN) communication module or a power line communication (PLC) module). A corresponding one of these communication modules may communicate with the external electronic device via the first network 498 (e.g., a short-range communication network, such as BLUETOOTH^{™}, wireless-fidelity (Wi-Fi) direct, or a standard of the Infrared Data Association (IrDA)) or the second network 499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 492 may identify and authenticate the electronic device 401 in a communication network, such as the first network 498 or the second network 499, using subscriber information (e.g., international mobile subscriber identity (IMSI)) stored in the subscriber identification module 496.

The antenna module 497 may transmit or receive a signal or power to or from the outside (e.g., the external electronic device) of the electronic device 401. The antenna module 497 may include one or more antennas, and, therefrom, at least one antenna appropriate for a communication scheme used in the communication network, such as the first network 498 or the second network 499, may be selected, for example, by the communication module 490 (e.g., the wireless communication module 492). The signal or the power may then be transmitted or received between the communication module 490 and the external electronic device via the selected at least one antenna.

Commands or data may be transmitted or received between the electronic device 401 and the external electronic device 404 via the server 408 coupled with the second network 499. Each of the electronic devices 402 and 404 may be a device of a same type as, or a different type, from the electronic device 401. All or some of operations to be executed at the electronic device 401 may be executed at one or more of the external electronic devices 402, 404, or 408. For example, if the electronic device 401 should perform a function or a service automatically, or in response to a request from a user or another device, the electronic device 401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 401. The electronic device 401 may provide the outcome, with or without further processing of the outcome, as at least part of a reply to the request. To that end, a cloud computing, distributed computing, or client-server computing technology may be used, for example.

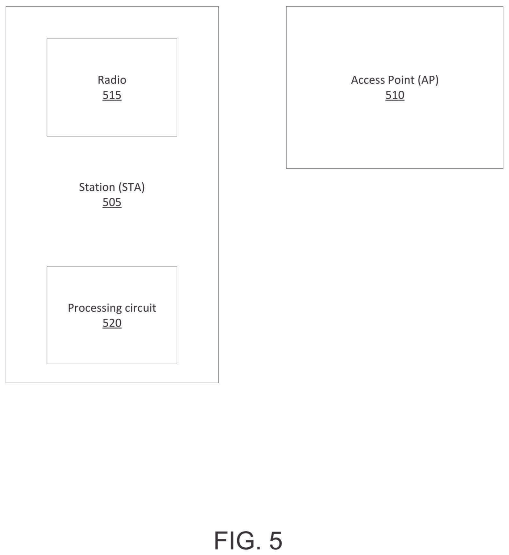

FIG. 5 is a block diagram of a system including a STA and an AP, according to an embodiment.

Referring to FIG. 5, a system including a STA 505 and AP 510 may be in communication with each other, where the AP 510 may be configured as an AP that implements the MAPC negotiation indication techniques disclosed herein. The AP 510 may include a radio 515 and a processing circuit (or a means for processing) 520, which may perform various methods disclosed herein, such as transmitting MAPC capability information and MAPC negotiation indication in broadcast or unicast management frames, determining when to set the MAPC negotiation indication to an enabled or disabled state based on locked coordination parameters or willingness to negotiate with neighboring APs, and performing MAPC discovery, agreement negotiation, or renegotiation procedures. For example, the processing circuit 520 may receive, via the radio 515, MAPC negotiation indications from neighboring APs, and the processing circuit 520 may transmit, via the radio 515, management frames carrying MAPC negotiation indication signals to other APs in the network.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method for wireless communication, comprising:
transmitting (301), by a first access point, AP (101) , capability information indicating one or more multi-access point coordination, MAPC, schemes; and
transmitting (302), by the first AP (101), an MAPC negotiation indication indicating an enabled state or a disabled state for MAPC negotiation.

2. The method of claim 1, wherein transmitting the MAPC negotiation indication comprises transmitting the MAPC negotiation indication in a broadcast frame.

3. The method of claim 1, wherein transmitting the MAPC negotiation indication comprises transmitting the MAPC negotiation indication in a unicast, multicast, or groupcast frame directed to a second AP (102).

4. The method of claim 1, wherein transmitting the MAPC negotiation indication comprises transmitting a first MAPC negotiation indication in a broadcast frame to a plurality of APs including a second AP (102), and transmitting a second MAPC negotiation indication in a unicast frame directed to the second AP (102), and
wherein the second MAPC negotiation indication indicates that the first AP (101) is configured to participate in MAPC negotiation with the second AP (102).

5. The method of any one of claims 1 to 4, wherein the MAPC negotiation indication comprises a bit corresponding to an MAPC scheme of the one or more MAPC schemes.

6. The method of any one of claims 1 to 5, further comprising:
performing, by the first AP (101), MAPC discovery and MAPC agreement negotiation with a second AP (102) in response to the MAPC negotiation indication indicating that the first AP (101) is configured to participate in MAPC negotiation;
determining MAPC modes and parameters established with the second AP (102); and
transmitting a second MAPC negotiation indication.

7. The method of claim 6, further comprising:
operating the second AP (102) according to the MAPC modes and parameters.

8. The method of claim 6 or 7, further comprising:
transmitting a second MAPC negotiation indication to the second AP indicating that the first AP (101) is configured to participate in MAPC renegotiation with the second AP (102); and
performing a second MAPC agreement negotiation with the second AP (102) to determine second MAPC modes and parameters.

9. The method of any one of claims 1 to 8, wherein the one or more MAPC schemes comprise at least one of coordinated restricted target wake time, Co-RTWT, coordinated spatial reuse, Co-SR, coordinated beamforming, Co-BF, coordinated time division multiple access, Co-TDMA, or coordinated channel recommendation, Co-CR.

10. A method for wireless communication comprising:
receiving (351), by a second access point, AP (102), capability information indicating one or more MAPC schemes; and
receiving (352), by the second AP (102), an MAPC negotiation indication indicating an enabled state or a disabled state for MAPC negotiation.

11. An electronic device (401) comprising:
a transceiver (490); and
a processor (420) coupled to the transceiver (490) and configured to perform at least one or more steps of the method of any one of the previous claims.

## Amended claims

### Amended claims in accordance with Rule 137(2) EPC.

1. A method for wireless communication, comprising:
transmitting (301), by a first access point, AP (101) , capability information indicating one or more multi-access point coordination, MAPC, schemes; and
transmitting (302), by the first AP (101), an MAPC negotiation indication indicating an enabled state or a disabled state for MAPC negotiation.

2. The method of claim 1, wherein transmitting the MAPC negotiation indication comprises transmitting the MAPC negotiation indication in a broadcast frame.

3. The method of claim 1, wherein transmitting the MAPC negotiation indication comprises transmitting the MAPC negotiation indication in a unicast, multicast, or groupcast frame directed to a second AP (102).

4. The method of claim 1, wherein transmitting the MAPC negotiation indication comprises transmitting a first MAPC negotiation indication in a broadcast frame to a plurality of APs including a second AP (102), and transmitting a second MAPC negotiation indication in a unicast frame directed to the second AP (102), and
wherein the second MAPC negotiation indication indicates that the first AP (101) is configured to participate in MAPC negotiation with the second AP (102).

5. The method of any one of claims 1 to 4, wherein the MAPC negotiation indication comprises a bit corresponding to an MAPC scheme of the one or more MAPC schemes.

6. The method of any one of claims 1 to 5, further comprising:
performing, by the first AP (101), MAPC discovery and MAPC agreement negotiation with a second AP (102) in response to the MAPC negotiation indication indicating that the first AP (101) is configured to participate in MAPC negotiation;
determining MAPC modes and parameters established with the second AP (102); and
transmitting a second MAPC negotiation indication.

7. The method of claim 6, further comprising:
operating the second AP (102) according to the MAPC modes and parameters.

8. The method of claim 6 or 7, further comprising:
transmitting a third MAPC negotiation indication to the second AP indicating that the first AP (101) is configured to participate in MAPC renegotiation with the second AP (102); and
performing a second MAPC agreement negotiation with the second AP (102) to determine second MAPC modes and parameters.

9. The method of any one of claims 1 to 8, wherein the one or more MAPC schemes comprise at least one of coordinated restricted target wake time, Co-RTWT, coordinated spatial reuse, Co-SR, coordinated beamforming, Co-SF, coordinated time division multiple access, Co-TDMA, or coordinated channel recommendation, Co-CR.

10. A method for wireless communication comprising:
receiving (351), by a second access point, AP (102), capability information indicating one or more MAPC schemes; and
receiving (352), by the second AP (102), an MAPC negotiation indication indicating an enabled state or a disabled state for MAPC negotiation.

11. An electronic device (401) comprising:
a transceiver (490); and
a processor (420) coupled to the transceiver (490) and configured to perform the method of any one of the previous claims.
